# EUROPÄISCHE PATENTSCHRIFT

(11) **EP 1 991 800 B1**
(45) Veröffentlichungstag und Bekanntmachung des Hinweises auf die Patenterteilung: **01.01.2014**
(21) Anmeldenummer: 07721934.3
(22) Anmeldetag: 20.02.2007
(51) Int. Cl.: F16J 15/16, F16J 15/56

(54) **DICHTUNGSSYSTEM MIT DRUCKENTLASTUNGSELEMENTEN UND VERWENDUNG EINES DICHTUNGSSYSTEMS ZUR EINSTELLUNG EINER ZWISCHENRAUMDRUCKKASKADE**
SEALING SYSTEM WITH PRESSURE RELIEF ELEMENTS AND USE OF A SEALING SYSTEM FOR PRODUCING A PRESSURE CASCADE IN AN INTERMEDIATE SPACE
SYSTÈME D'ÉTANCHÉITÉ PRÉSENTANT DES ÉLÉMENTS DE DÉCOMPRESSION, ET UTILISATION D'UN SYSTÈME D'ÉTANCHÉITÉ POUR LE RÉGLAGE D'UNE CASCADE DE PRESSION DANS DES ESPACES INTERMÉDIAIRES

(30) Priorität: 27.02.2006 DE 102006009491
(43) Veröffentlichungstag der Anmeldung: 19.11.2008
(73) Patentinhaber: Trelleborg Sealing Solutions Germany GmbH, 70565 Stuttgart (DE)
(72) Erfinder: JORDAN, Holger, 73765 Neuhausen a.d.F. (DE)
(74) Vertreter: Kohler Schmid Möbus
(86) Internationale Anmeldenummer: PCT/DE2007/000317
(87) Internationale Veröffentlichungsnummer: WO 2007/095915

(56) Entgegenhaltungen:
- DE-A1- 3 620 539
- DE-A1- 19 654 357
- US-A1- 2002 153 665
- US-B1- 6 290 235

## Beschreibung

Die Erfindung betrifft ein Dichtungssystem zwischen zwei gegeneinander beweglichen Bauteilen zum Abdichten einer Hochdruckseite gegenüber einer Niederdruckseite. Ein äußeres Bauteil weist eine zu einem inneren Bauteil offene, der Niederdruckseite zugewandte erste Ringnut zur Aufnahme einer Dichtungsanordnung und eine zum inneren Bauteil offene, der Hochdruckseite zugewandte zweite Ringnut zur Aufnahme eines Druckentlastungselements auf.

Die Dichtungsanordnung umfasst einen ersten Dichtring aus einem elastisch verformbaren Material und einen ersten Vorspannring aus einem elastisch verformbaren Material. Der erste Dichtring liegt am inneren Bauteil an und wird durch den ersten Vorspannring, der zusätzlich gegenüber der ersten Ringnut abdichtet, radial gespannt.

Bei derartigen Dichtungssystemen kann im Betriebszustand, d.h. bei einer translatorischen Bewegung der beiden Bauteile zueinander, ein Mediendruckaufbau in den Zwischenräumen zwischen den in den einzelnen Ringnuten vorgesehenen Elementen auftreten. Verursacht werden kann dies durch ungünstige Geschwindigkeitsverhältnisse eines Bauteils, beispielsweise einer Kolbenstange oder eines Kolbens, relativ zum Einbauraum. Bei ungünstigen Geschwindigkeitsverhältnissen zwischen Dichtung und Gegenlauffläche kann das hydrodynamische Rückförderverhalten der Dichtung nicht mehr ausreichen, um das entstandene Schmierölvolumen des ausfahrenden Hubs wieder in einen entsprechenden Zwischenraum zurückzufördern. Durch die Akkumulation der Restschmierölmenge kann ein Druck im Zwischenraum entstehen, der bis zum Mehrfachen des eigentlichen Betriebsdruck ansteigen kann. Ein solcher Druckaufbau kann zu einer Beschädigung der Bauteile hin bis zu einem Bersten der Bauteile und einem Ausfall des Gesamtsystems führen.

Durch die EP 0 946 837 B1 und die US 29002/153665 (nächstliegender Stand der Technik) ist jeweils ein Druckentlastungselement bekannt geworden, das einen am inneren Bauteil anliegenden Dichtring aus einem elastisch verformbaren Material und einen den Dichtring radial spannenden, gegenüber der zweiten Ringnut abdichtenden Spannring aus einem elastisch verformbaren Material umfasst. Der zweite Dichtring weist eine Dichtkante mit einem hochdruckseitigen Kontaktflächenwinkel und einem niederdruckseitigen Kontaktflächenwinkel auf. Das Druckentlastungselement zeichnet sich durch einen Verbindungskanal im Dichtring aus, über den die Hochdruckseite und die Niederdruckseite verbindbar sind. Der Verbindungskanal ist bei die Hochdruckseite gegenüber der Niederdruckseite abdichtendem Dichtring verschlossen und bei invertierter Drucklage freigegeben. Ein derartiges Druckentlastungselement dient in oben beschriebenem Dichtungssystem als eine Art Rückschlagventil, das geöffnet ist, sobald der Druck p_{Z} im Zwischenraum zwischen der Dichtungsanordnung und dem Druckentlastungselement den Druck p_{H} auf der Hochdruckseite übersteigt, P_{Z} > P_{H}. Durch das Öffnen des Verbindungskanals kann der im Zwischenraum anstehende Druck zur Hochdruckseite hin entweichen. Nach der Entspannung steht im Zwischenraum der Druck auf der Hochdruckseite an, P_{Z} = P_{H}.

Der Erfindung liegt die Aufgabe zugrunde, die Druckentlastung einer Dichtungsanordnung in einem vorstehend genannten Dichtungssystem anwendungsabhängig zu steuern, indem eine Druckentlastung auch erst dann erfolgen kann, wenn ein Zwischendruck wesentlich größer ist als der abzudichtende Hochdruck, wobei das Druckentlastungselement zugleich effektiv vor destruktiv wirkenden Kräften geschützt werden soll.

Die Aufgabe wird erfindungsgemäß durch ein Dichtungssystem mit den in Patentanspruch 1 angegebenen Merkmalen gelöst. Das erfindungsgemäße Dichtungssystem weist eine oder mehrere zweite Ringnuten auf, wobei in jeweils jeder zweiten Ringnut ein Druckentlastungselement vorgesehen ist, das einen am inneren Bauteil anliegenden zweiten Dichtring aus einem elastisch verformbaren Material und einen den zweiten Dichtring radial spannenden, gegenüber der zweiten Ringnut abdichtenden zweiten Vorspannring aus einem elastisch verformbaren Material aufweist. Jedem Druckentlastungselement ist mindestens ein Verbindungskanal zugeordnet, über den ein Zwischenraum zwischen der Dichtungsanordnung und dem ersten Druckentlastungselement mit der Hochdruckseite oder ein Zwischenraum zwischen zwei benachbarten Druckentlastungselementen mit der Hochdruckseite verbindbar ist oder zwei benachbarte Zwischenräume über den Verbindungskanal miteinander verbindbar sind. Jeder Verbindungskanal ist in einer Drucklage P_{ZN} > P_{H} bzw. P_{ZN} > P_{ZH} geschlossen und in einer Druckentlastungslage P_{ZN} ≥ P_{H}+Pₖᵣᵢₜ bzw. P_{ZN} ≥ P_{ZH}+Pₖᵣᵢₜ geöffnet, wobei P_{H} der hydraulische Druck auf der Hochdruckseite, P_{ZN} der hydraulische Druck im niederduckseitigen Zwischenraum, P_{ZH} der hydraulische Druck im hochdruckseitigen Zwischenraum und Pₖᵣᵢₜ eine Druckzuwachsgröße ist, bei der oder bei deren Überschreitung der Verbindungskanal geöffnet ist.

Zur Abdichtung eines Systems zweier gegeneinander beweglicher Bauteile wird eine Primärdichtung im Dichtspalt angebracht. Als Primärdichtung dient die in der ersten Ringnut vorgesehene Dichtungsanordnung. Zur Druckentlastung der Primärdichtung sind auf der Hochdruckseite Druckentlastungselemente in weiteren, zweiten Ringnuten vorgesehen. In dem Dichtungssystem sind inneres und äußeres Bauteil vertauschbar, so dass erste und zweite Ringnuten sowohl im inneren als auch im äußeren Bauteil vorgesehen sein können. Die Anordnung eines oder mehrerer Druckentlastungselemente auf der Hochdruckseite bietet den Vorteil, dass der Druck auf der Hochdruckseite nicht unmittelbar an der Primärdichtung anliegt. Dieser Vorteil wirkt sich besonders bei der Anordnung mehrerer hintereinandergeordneter Druckentlastungselemente aus.

Beim Aufbau eines Dichtungssystems mit einer Dichtungsanordnung und einem oder mehreren Druckentlastungselementen sind ein oder mehrere Zwischenräume zwischen dem oder den Druckentlastungselementen und der Dichtungsanordnung vorgesehen. Im hydraulischen Betrieb können in den einzelnen, durch Druckentlastungselemente voneinander getrennten, Zwischenräumen unterschiedliche hydraulische Drücke entstehen. Die Druckdifferenz zwischen benachbarten Zwischenräumen bestimmt den Druck, mit dem das entsprechende Druckentlastungselement belastet wird. Jedem Druckentlastungselement ist mindestens ein Verbindungskanal zur Druckentlastung des auf der Niederduckseite angrenzenden niederdruckseitigen Zwischenraums zugeordnet. Jeder Verbindungskanal verbindet den niederdruckseitigen Zwischenraum, in dem der hydraulische Druck P_{ZN} anliegt, mit dem der Hochdruckseite zugewandten, hochdruckseitigen Zwischenraum, in dem der hydraulische Druck P_{ZH} anliegt, bzw. mit der den Hochdruck P_{H} aufweisenden Hochdruckseite. Der Verbindungskanal ist in einer Grunddrucklage P_{ZN} ≤ P_{ZH} bzw. P_{ZN} ≤ P_{H} des Dichtungssystems, in der der Druck P_{ZN} im niederdruckseitigen Zwischenraum kleiner oder gleich dem Druck P_{ZH} im hochdruckseitigen Zwischenraum bzw. dem Druck P_{H} auf der Hochdruckseite ist, geschlossen. In der Grunddrucklage dichtet der Dichtring den hochdruckseitigen Zwischenraum bzw. die Hochdruckseite gegenüber dem niederdruckseitigen Zwischenraum ab. Der erfindungsgemäße Verbindungskanal bleibt auch in einer invertierten Drucklage P_{ZN} > P_{ZH} bzw. P_{ZN} > P_{H} geschlossen, in der der niederdruckseitige Zwischenraumdruck den hochdruckseitigen Druck übersteigt und in der der Dichtring den niederdruckseitigen Zwischenraum gegenüber dem hochdruckseitigen Zwischenraum bzw. gegenüber der Hochdruckseite abdichtet. Der Verbindungskanal wird erst beim Erreichen einer Druckentlastungslage P_{ZN} ≥ P_{ZH}+Pₖᵣᵢₜ bzw. P_{ZN} ≥ P_{H}+Pₖᵣᵢₜ geöffnet, in der eine Druckzuwachsgröße Pₖᵣᵢₜ erreicht oder überschritten wird. Die Druckzuwachsgröße Pₖᵣᵢₜ stellt einen kritischen Öffnungsdruck für den Verbindungskanal dar und .ist erfindungsgemäß durch eine Verformung des zweiten Vorspannrings in axialer Richtung definiert.

Die Druckentlastung durch die einseitig wirkenden Verbindungskanäle ist besonders vorteilhaft bei der Aneinanderreihung mehrerer Druckentlastungselemente. Im hydraulischen Betrieb kann der hydraulische Druck in den Zwischenräumen unterschiedlich stark ansteigen. Die Druckentlastung eines Zwischenraums hängt ausschließlich von dem Druck eines weiteren, nämlich des hochdruckseitig nächsten, Zwischenraums ab. Sobald die Druckdifferenz P_{ZN} - P_{ZH} zwischen beiden an das Druckentlastungselement angrenzenden Zwischenräumen bzw. P_{ZN} - P_{H} zwischen dem Zwischenraum und der Hochdruckseite die jeweilige Druckzuwachsgröße Pₖᵣᵢₜ erreicht, P_{ZN} - P_{ZH} = Pₖᵣᵢₜ bzw. P_{ZN} - P_{H} = Pₖᵣᵢₜ, wird der entsprechende Verbindungskanal geöffnet, so dass ein Druckausgleich zwischen den miteinander verbundenen Druckbereichen bzw. Zwischenräumen stattfindet. Auf diese Weise wird erreicht, dass in dem erfindungsgemäßen Dichtungssystem ein Zwischenraum bei sämtlichen Drücken P_{ZN}- P_{ZH} ≥ Pₖᵣᵢₜ, insbesondere bei Zwischenraumdrücken P_{ZN}, P_{ZH} < P_{H} unterhalb des auf der Hochdruckseite anstehenden hydraulischen Betriebsdruckes, druckentlastet wird. Der hochdruckseitige Kontaktflächenwinkel der Dichtkante des zweiten Dichtrings ist jeweils kleiner oder gleich dem niederdruckseitigen Kontaktflächenwinkel der Dichtkante, so dass im druckbeaufschlagten Zustand und bei einer Hin- und Herbewegung des inneren Bauteils im äußeren Bauteil für den Dichtring eine bestimmte Leckagerate eingestellt ist, über die der hydraulische Druck im niederdruckseitigen Zwischenraum eingestellt wird.

Für den Dichtmechanismus sind die Vorspannung und der Kontaktpressungsverlauf der dynamischen Abdichtung von grundsätzlicher Bedeutung. Die Vorspannung wird beim Einbau des inneren Bauteils in das äußere Bauteil erzeugt. Der Kontaktpressungsverlauf entspricht der von einer druckflüssigkeitsbelasteten Oberfläche des Dichtrings auf die Dichtfläche übertragenen Spannung. Die Bilanz von ausgeschlepptem Ölfilm zu eingeschlepptem Schmierfilm bildet die Leckagerate. Die hydrodynamische Leckagerate wird durch den Pressungsgradienten im Kontaktbereich hin zur Hochdruckseite festgelegt. Der Pressungsgradient hängt von den Kontaktflächenwinkeln zwischen der Dichtkante und dem abzudichtenden inneren Bauteil ab. Ein hochdruckseitig steiler Kontaktflächenwinkel bewirkt einen steilen Pressungsgradient und eine geringe Leckagerate, wohingegen ein hochdruckseitiger flacher Kontaktflächenwinkel zu einem flachen Pressungsgradienten und einer größeren Leckagerate führt.

Solange die Rückförderfähigkeit eines Dichtungssystems größer oder gleich der ausgeförderten Ölmenge ist, spricht man von dichten Systemen. Deshalb weist der erste Dichtring der in der ersten Ringnut angeordneten Dichtungsanordnung, die als Primärdichtung im erfindungsgemäßen Dichtungssystem dient, einen steilen Pressungsgradienten auf. An den Druckentlastungselementen werden Leckraten in kontrollierter Weise zugelassen, indem die Dichtkanten der entsprechenden Dichtringe symmetrische Kontaktflächenwinkel oder asymmetrische Kontaktflächenwinkel mit hochdruckseitig kleinerem Kontaktflächenwinkel als niederdruckseitig aufweisen und infolgedessen flache Pressungsgradienten besitzen.

Die hochdruckseitigen und niederdruckseitigen Kontaktflächenwinkel sind derart gewählt, dass im druckbeaufschlagten Zustand und bei einer Hin- und Herbewegung des inneren Bauteils im äußeren Bauteil eine für jeden Dichtring jeweils bestimmte Leckagerate eingestellt wird, über die der hydraulische Druck in dem an das jeweilige Druckentlastungselement niederdruckseitig angrenzenden Zwischenraum eingestellt wird.

Über die Kontaktflächenwinkel wird die hydrodynamische Leckage für jedes Druckentlastungselement derart gewählt, dass in jedem Zwischenraum ein bestimmter hydraulischer Druck anliegt. Auf diese Weise werden im erfindungsgemäßen Dichtungssystem definierte Zwischenraumdrücke eingestellt, die in bevorzugter Ausführung kaskadenartig von der Hochdruckseite zur Niederdruckseite hin abnehmen. An jedem Druckentlastungselement und an der Dichtungsanordnung ist eine Druckstufe definiert, deren Höhe der an dem entsprechenden Element anliegenden Druckdifferenz entspricht. Das erfindungsgemäße Dichtungssystem besitzt neben dem hydrodynamischen Rückfördervermögen der Dichtringe eine hydrostatische Entspannungsmöglichkeit über die in den Druckentlastungselementen vorgesehenen Verbindungskanäle. Die Ventilfunktion der Verbindungskanäle führt zu einer Druckentlastung eines Zwischenraums bei einem Anstieg des Zwischenraumdrucks über den

Zwischenraumdruck des hochdruckseitig nächsten Zwischenraums plus die entsprechende Druckzuwachsgröße.

Bei optimaler Auslegung der einzelnen Elemente des erfindungsgemäßen Dichtungssystems kann der System- oder Arbeitsdruck in einem Hydrauliksystem ohne Einschränkungen auf die Funktionalität oder Lebensdauer des Dichtungssystems erhöht werden. Durch einen definierten Druck hinter einem Druckentlastungselement kann sogar die Schmierfilmbildung im Dichtspalt der Druckdichtung verbessert werden, was wiederum die Reibung und die Lebensdauer des Gesamtsystems positiv beeinflusst. Erreicht wird dieser optimierte Zustand durch eine Einstellbarkeit des Öffnungsdruckes der Druckventilation im Druckentlastungselement, das heißt, der entsprechenden Druckzuwachsgröße. Die niederdruckseitige Mündungsöffnung bzw. das niederdruckseitige Ende des Verbindungskanals wird am Innen- oder Außendurchmesser des zweiten Dichtrings oder des zweiten Vorspannrings oder in der zweiten Ringnut axial unterschiedlich angebracht, so dass durch die druckabhängige Verschiebung der Druckentlastungselemente untereinander ein mehr oder weniger hoher Öffnungsdruck eingestellt wird.

Durch das Zusammenspiel von hydrodynamischem Fördervermögen und hydrostatischer Entlastung kann auch unter ungünstigen Betriebsverhältnissen mit einem Dichtungssystem aus beispielsweise einer Druckdichtung mit Entlastungskanal und einer nachgeschalteten Sekundärdichtung eine hohe Standzeit mit verbesserten bzw. ohne Leckagen nach Außen erreicht werden.

In bevorzugter Ausführung des erfindungsgemäßen Dichtungssystems ist zumindest einer der Verbindungskanäle in dem zweiten Dichtring oder in der zweiten Ringnut vorgesehen.

Ein in dem zweiten Dichtring vorgesehener Verbindungskanal ist vorteilhaft hinsichtlich eines Verschlusses und einer Öffnung des Verbindungskanals, da beide Betriebszustände durch eine An- oder Ablage des Dichtrings an Nutflächen der entsprechenden zweiten Ringnut oder Außenflächen des entsprechenden zweiten Vorspannrings sicher gewährleistet werden können. Das Druckentlastungselement ist derart in der zweiten Ringnut angeordnet, dass der Dichtring und der Vorspannring in einer invertierten Drucklage P_{ZN} > P_{ZH} bzw. P_{ZN} > P_{H} zur Hochdruckseite hin verschoben werden. Dabei bleibt zumindest eine der Mündungsöffnungen des Verbindungskanals, in der Regel die niederdruckseitige, geschlossen. Bei einem weiteren Ansteigen des Druckes werden der Vorspannring, der Dichtring oder beide Ringe deformiert, bis beim Erreichen der Druckentlastungslage P_{ZN} ≥ P_{ZH}+Pₖᵣᵢₜ bzw. P_{ZN} ≥ P_{H}+Pₖᵣᵢₜ die bis dahin noch geschlossene Mündungsöffnung freigegeben wird, so dass Druckmedium durch den Verbindungskanal vom niederdruckseitigen Zwischenraum in den hochdruckseitigen Zwischenraum fließen kann. Die Druckzuwachsgröße Pₖᵣᵢₜ entspricht der zur Freigabe des Verbindungskanals aufzuwendenden Deformationskraft pro Fläche. Das im niederdruckseitigen Zwischenraum anstehende Druckmedium fließt solange über den Verbindungskanal in den hochdruckseitigen Zwischenraum ab, bis sich eine Drucklage P_{ZN}-P_{ZH} < Pₖᵣᵢₜ bzw. P_{ZN}- P_{H} < Pₖᵣᵢₜ einstellt, in der die am Druckentlastungselement anliegende Druckdifferenz P_{ZN}-P_{ZH} unterhalb der Druckzuwachsgröße Pₖᵣᵢₜ liegt und der Verbindungskanal durch eine entsprechende Entspannung, Verformung und/oder Verschiebung des Vorspannrings und/oder des Dichtrings wieder verschlossen wird. Nach der Druckentlastung steht in dem niederdruckseitigen Zwischenraum ein Druck P_{ZN} ≅ (P_{ZH}+Pₖᵣᵢₜ)₋ bzw. P_{ZN} ≅ (P_{H}+Pₖᵣᵢₜ)₋ an, welcher unterhalb des hochdruckseitigen Drucks plus Druckzuwachsgröße liegt.

Der Vorteil einer Ausbildung des Verbindungskanals in der zweiten Ringnut liegt darin, dass der zweite Dichtring durch den im Einbauraum vorgesehenen Verbindungskanal in seiner Abdichtfunktion nicht beeinträchtigt wird. Der in der zweiten Ringnut vorgesehene Verbindungskanal wird durch den zweiten Vorspannring, den zweiten Dichtring oder beide Ringe verschlossen und in der Druckentlastungslage freigegeben. Wird der Verbindungskanal bzw. werden die Verbindungskanäle in der Ringnut ausgebildet, so können standardisierte Dichtringen und Vorspannringe eingesetzt werden, die in der Regel kostengünstiger hergestellt werden können.

Um eine gleichmäßige Druckbelastung des Dichtrings während eines Druckentlastungsvorgangs sicherzustellen, sind mehrere Verbindungskanäle, vorzugsweise in regelmäßigen Abständen, am gesamten Umfang des Dichtrings bzw. der Ringnut vorgesehen. Auf diese Weise kann das den Dichtring gesamtumfänglich belastende Druckmedium gleichverteilt in den hochdruckseitig nächsten Zwischenraum entweichen.

Weiter ist der Verbindungskanal bevorzugt als Durchgangsbohrung oder als Kerbe, Nut ausgeführt.

Der Verschluss und die Freigabe eines als Durchgangsbohrung ausgeführten Verbindungskanals wird durch Verschließen und Öffnen entsprechender Mündungsöffnungen gewährleistet, was in vielfältigen Bauarten des erfindungsgemäßen Dichtungssystems auf oftmals einfache Weise erreicht wird. Ein als Kerbe oder Nut ausgeführter Verbindungskanal wird in dem zweiten Dichtring bzw. in der zweiten Ringnut vorgesehen, beispielsweise eingefräst oder eingelassen, was vorteilhaft hinsichtlich einer Fertigung des erfindungsgemäßen Dichtungssystems und seiner Bestandteile ist.

In bevorzugter Ausgestaltung des erfindungsgemäßen Dichtungssystems ist die Durchgangsbohrung, insbesondere als Diagonalbohrung, zwischen einer einem Nutgrund zugewandten Außenoberfläche und einer hochdruckseitigen Seitenfläche oder -flanke des entsprechenden Dichtrings vorgesehen.

Die Durchgangsbohrung, über die zwei benachbarte Zwischenräume bzw. ein letzter Zwischenraum und die Hochdruckseite miteinander verbindbar sind, weist zumindest je eine niederdruckseitige und hochdruckseitige Mündungsöffnung auf. Eine Ausbildung der niederdruckseitigen Mündungsöffnung an der zum Nutgrund der entsprechenden Ringnut gewandten Außenoberfläche des Dichtrings ist besonders vorteilhaft, da an dieser Außenfläche der Vorspannring am Dichtring anliegt und sowohl in der Grunddrucklage P_{ZN} ≤ P_{ZH} bzw. P_{ZN} ≤ P_{H} als auch in der Drucklage P_{ZN} > P_{ZH} bzw. P_{ZN} > P_{H} die Mündungsöffnung verschließt. Bei weiterem Druckanstieg wird der Vorspannring an die hochdruckseitige Nutflanke der entsprechenden Ringnut gepresst, bis er in der Druckentlastungslage P_{ZN} ≥ P_{ZH}+Pₖᵣᵢₜ bzw. P_{ZN} ≥ P_{H}+Pₖᵣᵢₜ derart verformt ist, dass die niederdruckseitige Mündungsöffnung freigegeben ist.

Hochdruckseitig mündet der Verbindungskanal an einer Seitenfläche oder -flanke des Dichtrings und zwar in einer derartigen Position, dass die hochdruckseitige Mündungsöffnung zumindest in der Druckentlastungslage freigegeben ist. Aus diesem Grund befindet sich der hochdruckseitige Mündungsaustritt der Durchgangsbohrung üblicherweise in einer nahe zum innern Bauteil gelegenen, meistens abgeschrägten Seitenfläche. Der Mündungsaustritt ist zudem oftmals auf Höhe des Dichtspalts angeordnet. Der unerwünschte Verschluss einer Mündungsöffnung durch eine hochdruckseitige Nutflanke wird bei Dichtringen mit einem hochdruckseitig stufenartigen Querschnittprofil umgangen, indem die hochdruckseitige Mündungsöffnung an einer vom inneren Bauteil beabstandeten Innenoberfläche oder Absatzfläche vorgesehen ist.

Eine Ausführung der Durchgangsbohrung als Diagonalbohrung bietet den Vorteil eines direkten Druckmedienabflusses beim Druckentlastungsvorgang und ist kostengünstig und einfach herzustellen.

Eine der Mündungsöffnungen der Durchgangsbohrung ist bevorzugt entlang der axialen Erstreckung der Außenoberfläche vorgesehen.

Niederdruckseitig befindet sich die Mündungsöffnung auf der Außenoberfläche, die als Anlagefläche für das Vorspannelement dient. Eine Änderung der Drücke im niederdruckseitigen sowie im hochdruckseitigen Zwischenraum bewirkt eine druckabhängige Verschiebung und Verformung der in der zweiten Ringnut angeordneten Elemente. In der Drucklage P_{ZN} > P_{ZH} bzw. P_{ZN} > P_{H} wird der Dichtring samt den ihn spannenden Vorspannring in axialer Richtung zur Hochdruckseite hin verschoben. Die axiale Richtung ist durch die Bewegungsachse der translatorischen Bewegung des inneren Bauteils im äußeren Bauteil bestimmt. Ein weiterer Druckanstieg auf der Niederdruckseite führt zu einer Deformation und/oder Kompression des Vorspannrings, der an die hochdruckseitige Nutflanke der zweiten Ringnut gepresst wird und somit auf der Niederdruckseite sukzessive die Außenoberfläche des Dichtrings freigibt. Je weiter die Mündungsöffnung auf der Außenoberfläche zur Hochdruckseite hin verschoben ist, umso mehr Druckzuwachs ist zur Freigabe der Mündungsöffnung notwendig. Die axiale Lage der niederdruckseitigen Mündungsöffnung bestimmt somit den kritischen Öffnungsdruck für den Verbindungskanal und legt die zugehörige Druckzuwachsgröße Pₖᵣᵢₜ fest. Über die Wahl der axialen Lage der niederdruckseitigen Mündungsöffnung der Durchgangsbohrung kann für jedes Druckentlastungselement ein bestimmter Öffnungsdruck eingestellt werden. Bei mehreren in einem Dichtring vorgesehenen Durchgangsbohrungen befinden sich die niederdruckseitigen Mündungsöffnungen bevorzugt in der gleichen axialen Lage, da jede gegenüber den anderen vorgesetzt in die Außenoberfläche mündende Durchgangsbohrung zuerst freigegeben wird und somit eine vorzeitige Druckentlastung bewirkt.

Der zweite Dichtring weist weiter bevorzugt eine entlang der radialen Ersteckung der Außenoberfläche vorgesehene Kerbe oder Nut auf, in der eine der Mündungsöffnungen der Durchgangsbohrung vorgesehen ist.

In dieser Ausführungsform des erfindungsgemäßen Dichtungssystems mündet die Durchgangsbohrung niederdruckseitig in einer Kerbe, die sich in radialer Richtung entlang der Außenoberfläche des Dichtrings über den Umfang oder Teile des Umfangs des Dichtrings gesehen erstreckt. Bei Erreichen der Druckentlastungslage P_{ZN} ≥ P_{ZH}+Pₖᵣᵢₜ bzw. P_{ZN} ≥ P_{H}+Pₖᵣᵢₜ wird die Radialnut und die in sie mündende Durchgangsbohrung durch Ablage des Vorspannrings freigegeben. Diese Ausführungsform ist besonders vorteilhaft bei mehreren Durchgangsbohrungen, die entlang des Dichtringumfangs angeordnet sind und in die Radialnut münden, da bei Freigabe der Radialnut alle Durchgangsbohrung gleichzeitig geöffnet werden und das Druckmedium gleichverteilt über die Durchgangsbohrungen in den hochdruckseitig nächsten Zwischenraum abfließen kann.

In einer weiteren bevorzugten Ausgestaltung des erfindungsgemäßen Dichtungssystems ist die Kerbe oder Nut in einer einem Nutgrund zugewandten Außenoberfläche und einer hochdruckseitigen Seitenflanke des entsprechenden Dichtrings vorgesehen.

Eine derartig ausgeführte Kerbe oder Nut ist im geschlossenen Zustand des Verbindungskanals durch den auf der Außenoberfläche anliegenden Vorspannring überdeckt und gegenüber dem niederdruckseitigen Zwischenraum abgedichtet. Die Kerbe oder Nut verläuft zur Hochdruckseite hin entlang der Außenoberfläche, wird auf der Hochdruckseite entlang der Seitenfläche des Dichtrings fortgeführt und mündet in einer dem inneren Bauteil zugewandten Seitenkante des Dichtrings. Die hochdruckseitige Mündungsöffnung der Kerbe oder Nut ist in der Regel sowohl im geschlossenen als auch im geöffneten Zustand des Verbindungskanals offen. Bei einer Öffnung des Verbindungskanals ist der Vorspannring derart verformt, dass das niederdruckseitige Ende der Kerbe oder Nut mit dem niederdruckseitigen Zwischenraum verbunden ist, so dass Druckflüssigkeit durch die gesamte Kerbe oder Nut in den hochdruckseitigen Zwischenraum strömen kann.

Die Kerbe oder Nut ist bevorzugt auf der Außenoberfläche unterschiedlich lang mit einer axialen Richtungskomponente ausgebildet.

Die Kerbe oder Nut verläuft in axialer Richtung oder schräg zur Axialrichtung auf der Außenoberfläche. Durch die axiale Lage des niederdruckseitigen Endes der Kerbe oder Nut wird festgelegt, wie weit zur Hochdruckseite hin, das heißt, mit welcher Deformationskraft der Vorspannring zur Freigabe des niederdruckseitigen Ende gedrückt werden muss. Folglich wird die Druckzuwachsgröße Pₖᵣᵢₜ durch die axiale Längenkomponente des auf der Außenoberfläche verlaufenden Teilstücks der Kerbe oder Nut bestimmt. Je kürzer das Teilstück in Axialrichtung verläuft, umso größer sind der kritische Öffnungsdruck und die Druckzuwachsgröße Pₖᵣᵢₜ.

In einer weiteren bevorzugten Ausführung ist der Verbindungskanal als Nut oder Kerbe im Nutgrund und in einer hochdruckseitigen Nutflanke der zweiten Ringnut vorgesehen ist, wobei alternativ die Kerbe oder Nut in der hochdruckseitigen Nutflanke als Durchgangsbohrung im äußeren Bauteil ausgebildet.

Die im Einbauraum vorgesehene Nut oder Kerbe bietet den Vorteil, dass handelsübliche Dicht- und Vorspannringe zur erfindungsgemäßen Druckentlastung eingesetzt werden können. Das niederdruckseitige Teilstück des Verbindungskanals ist im Nutgrund ausgebildet und wird in den meisten Ausführungsformen durch den Vorspannring verschlossen und freigegeben. Die Axialkomponente der Länge des niederdruckseitigen Teilstückes bestimmt die axiale Lage des niederdruckseitigen Endes des Verbindungskanals und folglich die zu seiner Freigabe zu überwindende Druckzuwachsgröße Pₖᵣᵢₜ. Das hochdruckseitige Teilstück verläuft entweder entlang der hochdruckseitigen Nutflanke und endet am unteren Ende der Nutflanke oder verläuft als Durchgangsbohrung durch das äußere Bauteil und endet an der den Dichtspalt begrenzenden Innenoberfläche des äußeren Bauteils zwischen der zweiten Ringnut und der nächsten zweiten Ringnut. Die hochdruckseitige Mündungsöffnung des Verbindungskanals ist in dieser Ausführungsform stets geöffnet, die Öffnung des Verbindungskanals wird durch Freigabe und Verschluss des niederdruckseitigen Endes kontrolliert.

Weiter ist die Nut bevorzugt als V-Nut oder Rechtecksnut ausgeführt.

Das erfindungsgemäße Dichtungssystem weist in bevorzugter Ausführung eine an dem äußeren Bauteil vorgesehene, der Niederdruckseite zugewandte weitere Ringnut auf, die zum inneren Bauteil offen ist und in der ein am inneren Bauteil anliegender Abstreifring aus einem elastisch verformbaren Material vorgesehen ist.

In hydraulischen Systemen mit hohen Betriebsdrücken dient das erfindungsgemäße Dichtungssystem einer Entlastung der hochdruckbelasteten Primärdichtung. In dieser Ausführungsform ist der Primärdichtung auf der Niederdruckseite ein in einer weiteren Ringnut angeordneter Abstreifring nachgeordnet. Mithilfe des Abstreifrings wird das translatorisch im äußeren Bauteil bewegte innere Bauteil beim Einfahren gesäubert. Auf diese Weise wird eine Einfuhr von Schmutz- oder Fremdpartikeln in Zwischenräume des Dichtungssystems und eine etwaige Beschädigung von Dichtungsanordnung und Druckentlastungselementen vermieden.

In einer bevorzugten Ausführung der Erfindung ist zumindest einer der Vorspannringe ein O-Ring, ein Vierkantring, ein Quad-Ring^{®} (eingetragene Marke der Firma Quadion Corporation, Minneapolis, US) oder ein Formteil.

Bei der Anordnung eines Druckentlastungselements sind, je nach Ausführung des Verbindungskanals, die Anlagefläche zwischen dem Vorspannring und dem Dichtring und/oder die Anlagefläche zwischen dem Vorspannring und dem Nutgrund entscheidend für ein Verschließen und Öffnen des Verbindungskanals. Bei einem Vierkantring oder einem Formteil sind diese Anlageflächen eben ausgebildet, was eine dichtende Anlage sowohl zwischen beiden Ringen als auch zwischen Ring und Einbauraum sicherstellt. Ein O-Ring oder ein Quad-Ring^{®} bietet Vorteile hinsichtlich einer Verformung bei Druckzunahme, da im eingebauten Zustand des Druckentlastungselements Freiraum zwischen Vorspannring und Ringnut besteht, in den der Ring in der Druckentlastungslage gepresst werden kann.

In einer weiteren bevorzugten Ausführung des erfindungsgemäßen Dichtungssystems ist das äußere Bauteil ein Gehäuse, insbesondere ein Zylinder, und das innere Bauteil eine Kolbenstange eines in dem Gehäuse geführten Kolbens, wobei die Ringnuten entweder im äußeren Bauteil oder im inneren Bauteil ausgebildet sind.

Gehäuse-Kolben-Einheiten sind oftmals hydraulische Systeme mit hohen Betriebsdrücken. Eine erfindungsgemäße Anordnung und Ausführung von Druckentlastungselementen bietet sich zur Entlastung einer in solchen Systemen unter Hochdruck belasteten Primärdichtung an. Die Dichtungsanordnung kann durch einen in einer weiteren Ringnut angeordneten Abstreifring zur Säuberung der einzufahrenden Kolbenstange vervollständigt werden.

Weiter ist zumindest eine der Dichtkanten bevorzugt abgerundet.

Über eine Verrundung der Dichtkante kann der sogenannte Schleppwinkel zwischen Dichtring und bewegtem inneren Bauteil zur Bereitstellung einer bestimmten Leckrate im druckbeaufschlagten Zustand verändert und an die Systemanforderungen angepasst werden.

Die Erfindung umfasst weiter die Verwendung eines erfindungsgemäßen Dichtungssystems zur Einstellung einer Zwischenraumdruckkaskade, wobei die hydraulischen Drücke in den Zwischenräumen derart eingestellt werden, dass an jedem zweiten Dichtring die gleiche Druckdifferenz anliegt.

Der Vorteil einer derartigen Verwendung des erfindungsgemäßen Dichtungssystems liegt darin, dass alle Druckentlastungselemente in gleichem Maße zur Druckentlastung der unter Hochdruck belasteten Primärdichtung beitragen. Die einzelnen Komponenten einer derartigen gleichstufigen Zwischenraumdruckkaskade werden gleichmäßig beansprucht, wodurch die Lebensdauer des gesamten Dichtungssystems erhöht wird.

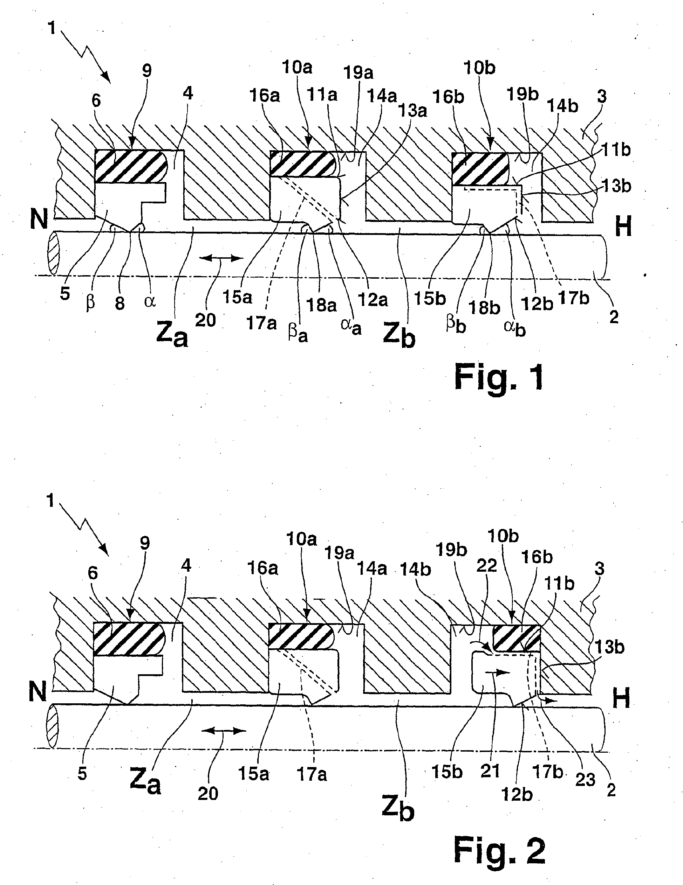

Weitere Vorteile der Erfindung ergeben sich aus der Beschreibung und den Figuren der Zeichnung. Das erfindungsgemäße Dichtungssystem ist sowohl als Ganzes als auch in Teilen in Ausführungsbeispielen in den Figuren 1 bis 4 dargestellt. Die in den Figuren gezeigten Ausführungsformen sind stark schematisiert dargestellt und nicht maßstäblich zu verstehen.

Es zeigt:
- Fig. 1: einen Schnitt durch ein beispielhaftes Dichtungssystem in einer Grunddrucklage;
- Fig. 2: einen Schnitt durch das beispielhafte Dichtungssystem der Fig. 1 in einer Druckentlastungslage;
- Fig. 3: einen Schnitt durch ein beispielhaftes Druckentlastungselement eines erfindungsgemäßen Dichtungssystems; und
- Fig. 4: einen Schnitt durch ein weiteres beispielhaftes Druckentlastungselement eines erfindungsgemäßen Dichtungssystems.

Figur 1 zeigt ein erfindungsgemäßes Dichtungssystem 1 zwischen zwei gegeneinander beweglichen Bauteilen zum Abdichten einer Hochdruckseite H gegenüber einer Niederdruckseite N. Ein inneres Bauteil 2 ist in einem äußeren Bauteil 3 derart angeordnet, dass es eine Translationsbewegung in Axialrichtung 20 durchführen kann. Das äußere Bauteil 3 ist ein zylinderförmiges Gehäuse und das innere Bauteil 2 eine Kolbenstange eines in dem Gehäuse geführten Kolbens. Ein Vertauschen von innerem 2 und äußerem Bauteil 3, beispielsweise eine Ausführung des äußeren Bauteils 3 als Kolben und des inneren Bauteil 2 als Rohr, ist vorstellbar. In Figur 1 ist der obere Halbraum des Dichtungssystems 1 im Längsschnitt gezeigt.

Das äußere Bauteil 3 weist insgesamt drei zum inneren Bauteil 2 offene Ringnuten auf, eine der Niederdruckseite N zugewandte erste Ringnut 4 und zwei auf der Hochdruckseite H angeordnete zweite Ringnuten 14a und 14b. In der ersten Ringnut 4 ist eine Dichtungsanordnung 9 vorgesehen, die einen am inneren Bauteil 2 anliegenden ersten Dichtring 5 aus einem elastisch verformbaren Material und einen den ersten Dichtring 5 radial spannenden, gegenüber der ersten Ringnut 4 abdichtenden ersten Vorspannring 6 aus einem elastisch verformbaren Material aufweist. Der erste Vorspannring 6 ist ein als O-Ring geformter Elastomerring. Die Dichtungsanordnung dient als Primärdichtung, weshalb eine Dichtkante 8 des ersten Dichtrings 5 einen steilen Pressungsgradienten aufweist. Der steile Pressungsgradient und die damit einhergehende geringe Leckagerate hängt von einem hochdruckseitigen Kontaktflächenwinkel α und einem niederdruckseitigen Kontaktflächenwinkel β zwischen dem ersten Dichtring 5 und dem inneren Bauteil 2 ab, wobei der hochdruckseitige Kontaktflächenwinkel α den niederdruckseitigen Kontaktflächenwinkel β übersteigt.

In der zweiten Ringnut 14a ist ein erstes Druckentlastungselement 10a, in der weiteren zweiten Ringnut 14b ein weiteres Druckentlastungselement 10b vorgesehen. Die Druckentlastungselemente 10a und 10b bestehen jeweils aus einem am inneren Bauteil 2 anliegenden zweiten Dichtring 15a und 15b aus einem elastisch verformbaren Material und den entsprechenden zweiten Dichtring 15a oder 15b radial spannenden, gegenüber der entsprechenden zweiten Ringnut 14a oder 14b abdichtenden zweiten Vorspannringe 16a und 16b aus elastisch verformbaren Dichtungswerkstoffen. Der zweite Vorspannring 16a im ersten Druckentlastungselements 10a ist ein O-Ring, der zweite Vorspannring 16b hingegen ein Formteil. Die zweiten Dichtringe 15a und 15b liegen mit Dichtkanten 18a und 18b am inneren Bauteil 2 an, wobei entsprechende hochdruckseitige Kontaktflächenwinkel αₐ und α_{b} jeweils kleiner als ein entsprechender niederdruckseitiger Kontaktflächenwinkel βₐ oder β_{b} sind. Der resultierende flache Pressungsgradient kann auch durch symmetrische, das heißt, gleiche Kontaktflächenwinkel an einer Dichtkante erreicht werden. Zusätzlich wird das Schleppverhalten durch ein Abrunden der Dichtkante beeinflusst.

Durch die Hintereinanderanordnung der Dichtungsanordnung 9, des ersten Druckentlastungselements 10a und des weiteren Druckentlastungselements 10b sind ein erster Zwischenraum Zₐ zwischen der Dichtungsanordnung 9 und dem ersten Druckentlastungselement 10a und ein weiterer Zwischenraum Z_{b} zwischen dem ersten Druckentlastungselement 10a und dem weiteren Druckentlastungselement 10b festgelegt. Die flachen Pressungsgradienten an den Dichtkanten 18a und 18b lassen an den Druckentlastungselementen 10a und 10b jeweils eine bestimmte Leckage im druckbeaufschlagten Zustand und bei einer translatorischen Bewegung des inneren Bauteils 2 im äußeren Bauteil 3 zu. Die jeweilige Leckagerate bestimmt den hydraulischen Druck im niederdruckseitig an das Druckentlastungselement angrenzenden Zwischenraum, beim ersten Druckentlastungselement 10a den Druck P_{Za} im ersten Zwischenraum Zₐ, beim weiteren Druckentlastungselement 10b den Druck P_{Zb} im weiteren Zwischenraum Z_{b}. Die Zwischenraumdrücke P_{Za} und P_{Zb} sind derart eingestellt, dass ein stufenartiger Anstieg vom Druck P_{N} auf der Niederdruckseite bis zum Druck P_{H} auf der Hochdruckseite im Dichtungssystem entsteht, P_{N} < P_{Za} < P_{Zb} < P_{H}. Die Wahl bestimmter Zwischenraumdrücke P_{Za} und P_{Zb} erlaubt das Einstellen einer gleichstufigen Druckkaskade, bei der die Dichtungsanordnung 9 als auch beide Druckentlastungselemente 10a und 10b, insbesondere der erste Dichtring 5 und beide zweiten Dichtringe 15a und 15b, mit der gleichen Druckdifferenz P_{Za} - P_{N} = PZ_{b} - P_{Za} = P_{H} - P_{Zb} belastet sind. In Fig. 1 ist die Grunddrucklage P_{N} < P_{Za} < P_{Zb} < P_{H} einer Zwischenraumdruckkaskade gezeigt. Die Dichtungsanordnung 9 liegt niederdruckseitig an der ersten Ringnut 4 an und dichtet somit den ersten Zwischenraum Zₐ gegenüber der Niederdruckseite N ab.

Der zweite Dichtring 15a des ersten Druckentlastungselements 10a weist eine Durchgangsbohrung 17a auf, die als Verbindungskanal zwischen dem ersten Zwischenraum Zₐ und dem weiteren Zwischenraum Z_{b} dient. Die Durchgangsbohrung 17a verläuft als Diagonalbohrung zwischen einer einem Nutgrund 19a zugewandten Außenoberfläche 11a und einer hochdruckseitigen Seitenfläche 12a des zweiten Dichtrings 15a. Für den hochdruckseitigen Mündungsaustritt der Durchgangsbohrung 17a wird die abgeschrägte Seitenfläche 12a einer hochdruckseitigen Seitenflanke 13a vorgezogen, da die nah zum inneren Bauteil 2 liegende Seitenfläche 12a in invertierter Drucklage P_{Za} > P_{Zb} nicht an der zweiten Ringnut 14a anliegt. Die niederdruckseitige Mündungsöffnung der Durchgangsbohrung 17a ist entlang der axialen Erstreckung 20 der Außenoberfläche 11a zur Hochdruckseite H hin versetzt. Der zweite Dichtring 15a kann zusätzlich eine entlang der radialen Ersteckung der Außenoberfläche 11a eingelassene Kerbe oder Nut zur Aufnahme der niederdruckseitigen Mündungsöffnungen aller in dem zweiten Dichtring 15a vorgesehenen Durchgangsbohrungen aufweisen. In der gezeigten Grunddrucklage P_{Za} < P_{Zb} liegt das Druckentlastungselement 10a niederdruckseitig an der zweiten Ringnut 14a an und die Durchgangsbohrung 17a ist durch den auf der Außenoberfläche 11 a anliegenden zweiten Vorspannring 16a verschlossen.

Der zweite Dichtring 15b des weiteren Druckentlastungselements 10b weist eine in einer einem Nutgrund 19b der zweiten Ringnut 14b zugewandten Außenoberfläche 11b und in einer hochdruckseitigen Seitenflanke 13b verlaufende Kerbe 17b auf, über die der weitere Zwischenraum Z_{b} und die Hochdruckseite H miteinander verbindbar sind. Die Kerbe 17b kann auch als Nut ausgeführt sein. Die Längenkomponente in axialer Richtung 20 des auf der Außenoberfläche 11 b verlaufenden Teilstücks der Kerbe 17b ist geringer als die Gesamtlänge der Außenoberfläche 11 b, weshalb das niederdruckseitige Ende der Kerbe zur Hochdruckseite H hin versetzt ist. In der gezeigten Grunddrucklage P_{Zb} < P_{H} liegen der zweite Dichtring 15b und zweite Vorspannring 16b des weiteren Druckentlastungselements 10b an einer niederdruckseitigen Nutflanke der zweiten Ringnut 14b an, wobei der zweite Vorspannring 16b das niederdruckseitige Ende der Kerbe 17b durch gesamtflächige Anlage an der Außenoberfläche 11b verschließt. Das hochdruckseitige Ende der Kerbe 17b mündet im Rand einer abgeschrägten Seitenfläche 12b und ist offen.

In Figur 2 ist dargestellt, wie sich die Lage der einzelnen Elemente des in Figur 1 gezeigten erfindungsgemäßen Dichtungssystems 1 bei Eintreten einer Druckentlastungslage P_{Zb} ≥ P_{H}+Pₖᵣᵢₜ ändert. In dieser Druckentlastungslage ist der Druck P_{Zb} im weiteren Zwischenraum Z_{b} über den Druck P_{H} auf der Hochdruckseite angestiegen, woraufhin das weitere Druckentlastungselement 10b zur Hochdruckseite H in Richtung 21 verschoben wurde und folglich an einer hochdruckseitigen Flanke der zweiten Ringnut 14b anliegt. Durch einen weiteren Anstieg des Zwischenraumdruckes p_{Zb} wird der zweite Vorspannring 16b aktiviert und erfährt eine weitere Verschiebung zur hochdruckseitigen Nutflanke der zweiten Ringnut 14b. Bei dieser Bewegung des zweiten Vorspannrings 16b wird die Kerbe 17b in der Druckentlastungslage P_{Zb} ≥ P_{H}+Pₖᵣᵢₜ freigegeben und das im Zwischenraum Z_{b} anstehende Druckmedium strömt, entlang der Richtung 22, durch die Kerbe 17b und gelangt, in Richtung 23, auf die Hochdruckseite H. Diese Druckentlastung des weiteren Zwischenraums Z_{b} findet bis zu dem Punkt statt, an dem der niederdruckseitige Überdruck die Druckzuwachsgröße Pₖᵣᵢₜ nicht mehr übersteigt, p_{Zb} - p_{H} < pₖᵣᵢₜ, und der zweite Vorspannring 16b nicht mehr ausreichend weit zur Hochdruckseite H hin deformiert wird, so dass das niederdruckseitige Ende der Kerbe 17b wieder durch Anlage des Vorspannrings 17b an der Außenoberfläche 11 b verschlossen wird.

Sowohl die Lage der Dichtungsanordnung 9 als auch die Position des ersten Druckentlastungselements 10a bleiben sowohl in der Drucklage P_{Zb} > P_{H} als auch in der Druckentlastungslage P_{Zb} ≥ P_{H}+Pₖᵣᵢₜ unverändert, da weiterhin P_{N} < P_{Za} < P_{Zb} gilt. Die Druckentlastung des weiteren Zwischenraums Z_{b} hat somit keinerlei Auswirkungen auf die Dichtungsanordnung 9, was die Wirksamkeit und Vorteilhaftigkeit einer mehrstufigen Druckkaskade zur Druckentlastung einer Primärdichtung verdeutlicht.

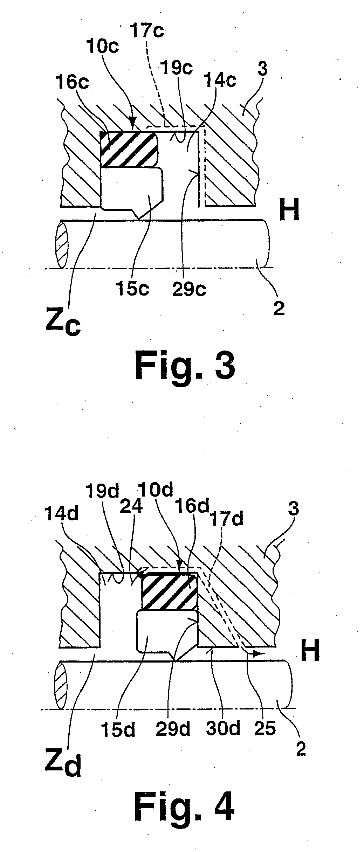

In Figur 3 ist ein Schnitt durch ein beispielhaftes Druckentlastungselement eines erfindungsgemäßen Dichtungssystems gezeigt. In einer im äußeren Bauteil 3 vorgesehenen zweiten Ringnut 14c ist ein Druckentlastungselement 10c aus einem am inneren Bauteil 2 anliegenden zweiten Dichtring 15c und einem zweiten Vorspannring 16c eingebaut. Dem Druckentlastungselement 10c ist ein Verbindungskanal zugeordnet, der als Nut 17c im Einbauraum, und zwar in der zweiten Ringnut 14c, ausgebildet ist. Die Nut 17c ist eine Rechtecksnut und verläuft im Nutgrund 19c und in einer hochdruckseitigen Nutflanke 29c der zweiten Ringnut 14c. In der gezeigten Grunddrucklage dichtet das Druckentlastungselement 10c die Hochdruckseite H gegenüber einem niederdruckseitig angrenzenden Zwischenraum Z_{c} ab und die als Druckentlastungskanal fungierende Nut 17c ist durch den zweiten Vorspannring 16c verschlossen.

In Figur 4 ist ein Schnitt durch ein weiteres beispielhaftes Druckentlastungselement eines erfindungsgemäßen Dichtungssystems gezeigt. In einer im äußeren Bauteil 3 vorgesehenen zweiten Ringnut 14d ist ein Druckentlastungselement 10d aus einem am inneren Bauteil 2 anliegenden zweiten Dichtring 15d und einem zweiten Vorspannring 16d eingebaut. Dem Druckentlastungselement 10d ist ein Verbindungskanal 17d zugeordnet, der im Einbauraum, und zwar in der zweiten Ringnut 14d und im äußeren Bauteil 3, vorgesehen ist. Der Verbindungskanal 17d ist im Nutgrund 19d der zweiten Ringnut 14d als Nut ausgebildet und wird ab einer hochdruckseitigen Nutflanke 29d als Durchgangsbohrung im äußeren Bauteil 3 weitergeführt. Die Figur 4 zeigt eine Druckentlastungslage, in der zweite Dichtring 15d und der zweite Vorspannring 16d an der hochdruckseitigen Nutflanke 29d der zweiten Ringnut 14d anliegen. Durch die druckbedingte Verformung des zweiten Vorspannrings 16d ist die im Nutgrund 19d eingelassene niederdruckseitige Öffnung des Verbindungskanals 17d geöffnet, so dass Hydraulikflüssigkeit vom niederdruckseitigen Zwischenraum Z_{d} in Pfeilrichtung 24 durch den Verbindungskanal 17d strömt und an einer den Dichtspalt zwischen innerem und äußerem Bauteil 2, 3 begrenzende Innenfläche 30d des äußeren Bauteils 3 in Pfeilrichtung 25 auf die Hochdruckseite H gelangt.

In einem Dichtungssystem zwischen zwei gegeneinander beweglichen Bauteilen zum Abdichten einer Hochdruckseite gegenüber einer Niederdruckseite wird einer in einer ersten Ringnut vorgesehenen Dichtungsanordnung hochdruckseitig ein oder mehrere Druckentlastungselemente in zweiten Ringnuten vorangeordnet. Die Druckentlastungselemente weisen je einen zweiten Dichtring mit flachen Pressungsgradienten auf. Die hydrodynamische Leckagerate für jedes Druckentlastungselement wird derart gewählt, dass in jedem Zwischenraum ein bestimmter hydraulischer Druck anliegt und eine Zwischenraumdruckkaskade entsteht. Das erfindungsgemäße Dichtungssystem besitzt neben dem hydrodynamischen Fördervermögen der Dichtringe eine hydrostatische Entspannungsmöglichkeit über in oder an den Druckentlastungselementen vorgesehene Verbindungskanäle, die als Rückschlagventile zu einer Druckentlastung eines Zwischenraums bei einem Anstieg des Zwischenraumdrucks über den Zwischenraumdruck des hochdruckseitig nächsten Zwischenraums plus eine entsprechende Druckzuwachsgröße führen.

## Patentansprüche

1. Dichtungssystem zwischen zwei gegeneinander beweglichen Bauteilen (2, 3) zum Abdichten einer Hochdruckseite (H) gegenüber einer Niederdruckseite (N), wobei ein äußeres Bauteil (3) eine zu einem inneren Bauteil (2) offene, der Niederdruckseite (N) zugewandte erste Ringnut (4) und zumindest eine zum inneren Bauteil (2) offene, der Hochdruckseite (H) zugewandte zweite Ringnut (14a, 14b, ....) aufweist,
wobei in der ersten Ringnut (4) eine Dichtungsanordnung (9) vorgesehen ist, die einen am inneren Bauteil (2) anliegenden ersten Dichtring (5) aus einem elastisch verformbaren Material und einen den ersten Dichtring (5) radial spannenden, gegenüber der ersten Ringnut (4) abdichtenden ersten Vorspannring (6) aus einem elastisch verformbaren Material aufweist,
wobei in jeweils jeder zweiten Ringnut (14a, 14b, ....) ein Druckentlastungselement (10a, 10b, ....) vorgesehen ist, das einen am inneren Bauteil (2) anliegenden zweiten Dichtring (15a, 15b, ....) aus einem elastisch verformbaren Material und einen den zweiten Dichtring (15a, 15b, ....) radial spannenden, gegenüber der zweiten Ringnut (14a, 14b, ....) abdichtenden zweiten Vorspannring (16a, 16b, ....) aus einem elastisch verformbaren Material aufweist, wobei
der zweite Dichtring (15a, 15b) eine Dichtkante (18a, 18b) mit einem hochdruckseitigen Kontaktflächenwinkel (αₐ, α_{b}) und einem niederdruckseitigen Kontaktflächenwinkel (βₐ, β_{b}) aufweist, wobei
jedem Druckentlastungselement (10a, 10b, ....) mindestens ein Verbindungskanal (17a, 17b, ....) mit einer niederdruckseitigen Öffnung zugeordnet ist, über den ein Zwischenraum (Zₐ) zwischen der Dichtungsanordnung (9) und dem ersten Druckentlastungselement (10a) mit der Hochdruckseite (H) oder ein Zwischenraum (Z_{b}) zwischen zwei benachbarten Druckentlastungselementen (10a, 10b) mit der Hochdruckseite (H) verbindbar ist oder zwei benachbarte Zwischenräume (Zₐ, Z_{b}, ....) über den Verbindungskanal (17a, 17b, ....) miteinander verbindbar sind,
**dadurch gekennzeichnet, dass**
jeder Verbindungskanal (17a, 17b, ....) in einer Drucklage P_{ZN} > P_{H} bzw. P_{ZN} > P_{ZH} geschlossen und in einer Druckentlastungslage P_{ZN} ≥ P_{H}+Pₖᵣᵢₜ bzw. P_{ZN} ≥ P_{ZH}+Pₖᵣᵢₜ geöffnet ist,
wobei P_{H} der hydraulische Druck auf der Hochdruckseite (H), P_{ZN} der hydraulische Druck im niederdruckseitigen Zwischenraum, P_{ZH} der hydraulische Druck im hochdruckseitigen Zwischenraum und Pₖᵣᵢₜ eine Druckzuwachsgröße ist, bei der oder bei deren Überschreitung der Verbindungskanal (17a, 17b, ....) geöffnet ist, wobei
P_{Krit} durch eine Verformung des zweiten Vorspannrings (156a, 16b;...) in axialer Richtung definiert ist, wobei
die niederdruckseitige Öffnung des Verbindungskanals (17a, 17b, ...), in der Drucklage P_{ZN} > P_{H} bzw. P_{ZN} > P_{ZH} durch den zweiten Vorspannring (16a, 16b,....) verschlossen ist und wobei
der hochdruckseitige Kontaktflächenwinkel (αₐ, α_{b}) der Dichtkante des zweiten Dichtrings kleiner oder gleich dem niederdruckseitigen Kontaktflächenwinkel (βₐ, β_{b}) der Dichtkante ist, so dass im druckbeaufschlagten Zustand und bei einer Hin- und Herbewegung des inneren Bauteils (2) im äußeren Bauteil (3) für den Dichtring (15a, 15b, ....) eine bestimmte Leckagerate eingestellt ist, über die der hydraulische Druck im niederdruckseitigen Zwischenraum (Zₐ, Z_{b},...) eingestellt wird.

2. Dichtungssystem nach Anspruch 1,
**dadurch gekennzeichnet, dass**
zumindest einer der Verbindungskanäle (17a, 17b, 17c, 17d) in dem zweiten Dichtring (15a, 15b) oder in der zweiten Ringnut (14c, 14d) vorgesehen ist.

3. Dichtungssystem nach Anspruch 2,
**dadurch gekennzeichnet, dass**
der Verbindungskanal als Durchgangsbohrung (17a, 17d) oder als Kerbe (17b), Nut (17c) ausgeführt ist.

4. Dichtungssystem nach Anspruch 3,
**dadurch gekennzeichnet, dass**
die Durchgangsbohrung (17a), insbesondere als Diagonalbohrung, zwischen einer einem Nutgrund (19a) zugewandten Außenoberfläche (11a) und einer hochdruckseitigen Seitenfläche oder -flanke (12a, 13a) des entsprechenden Dichtrings (15a) vorgesehen ist.

5. Dichtungssystem nach Anspruch 4,
**dadurch gekennzeichnet, dass**
eine der Mündungsöffnungen der Durchgangsbohrung (17a) entlang der axialen Erstreckung der Außenoberfläche (11a) vorgesehen ist.

6. Dichtungssystem nach Anspruch 4,
**dadurch gekennzeichnet, dass**
der zweite Dichtring (15a, 15b) eine entlang der radialen Ersteckung der Außenoberfläche (11a, 11b) vorgesehene Kerbe oder Nut aufweist, in der eine der Mündungsöffnungen der Durchgangsbohrung (17a) vorgesehen ist.

7. Dichtungssystem nach Anspruch 3,
**dadurch gekennzeichnet, dass**
die Kerbe (17b) oder Nut in einer einem Nutgrund (19b) zugewandten Außenoberfläche (11 b) und einer hochdruckseitigen Seitenflanke (13b) des entsprechenden Dichtrings (15b) vorgesehen ist.

8. Dichtungssystem nach Anspruch 7,
**dadurch gekennzeichnet, dass**
die Kerbe (17b) oder Nut auf der Außenoberfläche (11b) unterschiedlich lang mit einer axialen Richtungskomponente ausgebildet ist.

9. Dichtungssystem nach Anspruch 2,
**dadurch gekennzeichnet, dass**
der Verbindungskanal (17c, 17d) als Nut oder Kerbe im Nutgrund (19c, 19d) und in einer hochdruckseitigen Nutflanke (29c, 29d) der zweiten Ringnut (14c, 14d) vorgesehen ist, wobei alternativ die Kerbe oder Nut in der hochdruckseitigen Nutflanke (29c, 29d) als Durchgangsbohrung im äußeren Bauteil (3) ausgebildet ist.

10. Dichtungssystem nach einem der Ansprüche 3 oder 6 bis 9,
**dadurch gekennzeichnet, dass**
die Nut als V-Nut oder Rechtecksnut vorgesehen ist.

11. Dichtungssystem nach einem der Ansprüche 1 bis 10,
**dadurch gekennzeichnet, dass**
an dem äußeren Bauteil (3) eine der Niederdruckseite (N) zugewandte weitere Ringnut vorgesehen ist, die zum inneren Bauteil (2) offen ist und in der ein am inneren Bauteil (2) anliegender Abstreifring aus einem elastisch verformbaren Material vorgesehen ist.

12. Dichtungssystem nach einem der Ansprüche 1 bis 11,
**dadurch gekennzeichnet, dass**
zumindest einer der Vorspannringe (6, 16a, 16b, 16c, 16d) ein O-Ring, ein Vierkantring, ein Quad-Ring^{®} oder ein Formteil ist.

13. Dichtungssystem nach einem der Ansprüche 1 bis 12,
**dadurch gekennzeichnet, dass**
das äußere Bauteil (3) ein Gehäuse, insbesondere ein Zylinder, und das innere Bauteil (2) eine Kolbenstange eines in dem Gehäuse geführten Kolbens ist, und die Ringnuten (4, 14a, 14b) entweder im äußeren Bauteil (3) oder im inneren Bauteil (2) ausgebildet sind.

14. Dichtungssystem nach Anspruch 1,
**dadurch gekennzeichnet, dass**
zumindest eine der Dichtkanten (18a, 18b) abgerundet ist.

15. Verwendung eines Dichtungssystems nach einem der vorhergehenden Ansprüche zur Einstellung einer Zwischenraumdruckkaskade,
**dadurch gekennzeichnet, dass**
die hydraulischen Drücke in den Zwischenräumen (Zₐ, Z_{b}, ...) derart eingestellt werden, dass an jedem zweiten Dichtring (15a, 15b, ....) die gleiche Druckdifferenz anliegt.

## Claims

1. Sealing system between two mutually moving components (2, 3) for sealing a high pressure side (H) with respect to a low pressure side (N), wherein an outer component (3) has a first annular groove (4) opening towards an inner component (2) and facing the low pressure side (N) and at least one second annular groove (14a, 14b, ...) opening towards the inner component (2) and facing the high pressure side (H),
wherein a sealing configuration (9) is provided in the first annular groove (4) having a first sealing ring (5) seating on the inner component (2) and made from elastically deformable material as well as a preloading ring (6) radially spanning the first sealing ring (5) and sealing the first annular groove (4), the preloading ring (6) made from an elastically deformable material, wherein a pressure relief element (10a, 10b, ...) is provided in each of the second annular grooves (14a, 14b, ...), the pressure relief element (10a, 10b, ...) having a second sealing ring (15a, 15b, ...) seating on the inner component (2) and made from an elastically deformable material as well as a second preloading ring (16a, 16b, ...) radially spanning the second sealing ring (15a, 15b, ...) and sealing the second annular groove (14a, 14b, ...), said second preloading ring (16a, 16b, ...) made from an elastically deformable material, wherein
the second sealing ring (15a, 15b) has a sealing edge (18a, 18b) having a high pressure side contact surface angle (αₐ, α_{b}) and a low pressure side contact surface angle (βₐ, β_{b}), wherein
each pressure relief element (10a, 10b, ....) has at least one associated connecting channel (17a, 17b, ...) with an opening on the low pressure side, by means of which channel (17a, 17b, ...) an intermediate space (Zₐ) between the sealing configuration (9) and the first pressure relief element (10a) with the high pressure side (H) or an intermediate space (Z_{b}) between two neighboring pressure relief elements (10a, 10b) can be connected to the high pressure side (H) or by means of which two neighboring intermediate spaces (Zₐ, Z_{b}, ...) can be connected to each other, **characterized in that**
each connecting channel (17a, 17b, ...) is closed in a pressure configuration P_{ZN} > P_{H} or P_{ZN} > P_{ZH} and is open in a pressure relief configuration P_{ZN} ≥ P_{H} + P_{crit} or P_{ZN} ≥ P_{ZH} + P_{crit},
wherein P_{H} is the hydraulic pressure on the high pressure side (H), P_{ZN} the hydraulic pressure in the low pressure side intermediate space, P_{ZH} the hydraulic pressure in the high pressure side intermediate space and P_{crit} a pressure increase quantity at which or beyond which the connecting channel (17a, 17b, ...) is open, wherein
P_{crit} is defined by deformation of the second preloading ring (16a, 16b, ...) in an axial direction, wherein
the low-pressure side opening of the connecting channel (17a, 17b, ...) is sealed by the second preloading ring (16a, 16b, ...) during the pressure configuration P_{ZN} > P_{H} or P_{ZN} > P_{ZH}, and wherein
the high pressure side contact surface angle (αₐ, α_{b}) of the sealing edge of the second sealing ring is smaller or equal to the low pressure side contact surface angle (βₐ, β_{b}) of the sealing edge, such that, in the pressurized state and during back and forth motion of the inner component (2) in the outer component (3), a leakage rate is established which is defined for each individual sealing ring (15a, 15b, ...) and by means of which the hydraulic pressure in the low pressure side intermediate space (Zₐ, Z_{b}, ...) is adjusted.

2. Sealing system according to claim 1, **characterized in that** at least one of the connecting channels (17a, 17b, 17c, 17d) is provided in the second sealing ring (15a, 15b) or in the second annular groove (14c, 14d).

3. Sealing system according to claim 2, **characterized in that** the connecting channel is a through hole (17a, 17d), a notch (17b) or a groove (17c).

4. Sealing system according to claim 3, **characterized in that** the through hole (17a) is, in particular, a diagonal through hole disposed between an outer surface (11a) facing the bottom of the groove (19a) and a high pressure side surface or flank (12a, 13a) of the corresponding sealing ring (15a).

5. Sealing system according to claim 4, **characterized in that** one of the opening outlets of the through hole (17a) is disposed along the axial extension of the outer surface (11a).

6. Sealing system according to claim 4, **characterized in that** the second sealing ring (15a, 15b) has a notch or groove disposed along the radial extension of the outer surface (11a, 11b) in which one of the outlet openings of the through hole (17a) is provided.

7. Sealing system according to claim 3, **characterized in that** the notch (17b) or groove is provided in an outer surface (11b) facing the bottom of the groove (19b) and in a high pressure side flank (13b) of the corresponding sealing ring (15b).

8. Sealing system according to claim 7, **characterized in that** the notch (17b) or groove is formed in the outer surface (11b) having differing lengths with respect to an axially directed component.

9. Sealing system according to claim 2, **characterized in that** the connecting channel (17c, 17d) is provided in the form of a groove or notch in the bottom of the groove (19c, 19d) and in a high pressure side groove flank (29c, 29d) of the second annular groove (14c, 14d), wherein alternatively the notch or groove can be formed in the high pressure side groove flank (29c, 29d) in the form of a through hole in the outer component (3).

10. Sealing system according to one of the claims 3 or 6 through 9, **characterized in that** the groove is a V-shaped groove or a rectangular shaped groove.

11. Sealing system according to one of the claims 1 through 10, **characterized in that** an additional annular groove is provided in the outer component (3) facing the low pressure side (N) which is opened towards the inner component (2) and which has a wiping ring seating on the inner component (2) and made from an elastically deformable material.

12. Sealing system according to one of the claims 1 through 11, **characterized in that** at least one of the preloading rings (6, 16a, 16b, 16c, 16d) is an O-ring, a four-edged-ring, a quad-ring® or a preformed part.

13. Sealing system according to one of the claims 1 through 12, **characterized in that** the outer component (3) is a housing, in particular a cylinder, and the inner component (2) is a piston rod of a piston guided in the housing, and the annular grooves (4, 14a, 14b) are configured either in the outer component (3) or in the inner component (2).

14. Sealing system according to claim 1, **characterized in that** at least one of the sealing edges (18a, 18b) is rounded.

15. Use of a sealing system according to any one of the preceding claims for adjustment of an intermediate region pressure cascade,
**characterized in that**
the hydraulic pressures in the intermediate spaces (Zₐ, Z_{b}, ...) are adjusted in such a fashion that the same pressure difference is applied to each second sealing ring (15a, 15b, ...).

## Revendications

1. Système d'étanchéité entre deux composants (2, 3) mobiles l'un par rapport à l'autre, destiné à assurer l'étanchéité d'un côté haute pression (H) vis-à-vis d'un côté basse pression (N),
sachant qu'un composant extérieur (3) présente une première rainure annulaire (4) ouverte vers un composant intérieur (2) et tournée vers le côté basse pression (N), et au moins une deuxième rainure annulaire (14a, 14b, ...) ouverte vers le composant intérieur (2) et tournée vers le côté haute pression (H),
sachant qu'un ensemble d'étanchéité (9) est prévu dans la première rainure annulaire (4), ensemble qui présente une première bague d'étanchéité (5) constituée d'un matériau élastiquement déformable et appliquée contre le composant intérieur (2), et une première bague de précontrainte (6) constituée d'un matériau élastiquement déformable, serrant radialement la première bague d'étanchéité (5) et assurant l'étanchéité vis-à-vis de la première rainure annulaire (4),
sachant qu'un élément de détente respectif (10a, 10b, ...) est prévu dans chaque deuxième rainure annulaire (14a, 14b, ...), élément qui présente une deuxième bague d'étanchéité (15a, 15b, ...) constituée d'un matériau élastiquement déformable et appliquée contre le composant intérieur (2), et une deuxième bague de précontrainte (16a, 16b, ...) constituée d'un matériau élastiquement déformable, serrant radialement la deuxième bague d'étanchéité (15a, 15b, ...) et assurant l'étanchéité vis-à-vis de la deuxième rainure annulaire (14a, 14b, ...),
sachant que la deuxième bague d'étanchéité (15a, 15b) présente une arête d'étanchéité (18a, 18b) avec un angle de faces de contact (αₐ, α_{b}) côté haute pression et un angle de faces de contact (βₐ, β_{b}) côté basse pression,
sachant qu'au moins un canal de liaison (17a, 17b, ...) pourvu d'une ouverture côté basse pression est associé à chaque élément de détente (10a, 10b, ...), canal par l'intermédiaire duquel un espace intermédiaire (Zₐ) entre l'ensemble d'étanchéité (9) et le premier élément de détente (10a) peut être relié au côté haute pression (H) ou un espace intermédiaire (Z_{b}) entre deux éléments de détente voisins (10a, 10b) peut être relié au côté haute pression (H), ou deux espaces intermédiaires voisins (Zₐ, Z_{b}, ...) peuvent être reliés entre eux via le canal de liaison (17a, 17b, ...),
**caractérisé en ce que** chaque canal de liaison (17a, 17b, ...) est fermé dans une position de pression P_{ZN} > P_{H} ou P_{ZN} > P_{ZH} et ouvert dans une position de détente P_{ZN} ≥ P_{H} + P_{crit} ou P_{ZN} ≥ P_{ZH} + P_{crit},
sachant que P_{H} est la pression hydraulique du côté haute pression (H), P_{ZN} la pression hydraulique dans l'espace intermédiaire côté basse pression, P_{ZH} la pression hydraulique dans l'espace intermédiaire côté haute pression, et P_{crit} une valeur d'augmentation de pression à laquelle ou lors du dépassement de laquelle le canal de liaison (17a, 17b, ...) est ouvert,
sachant que P_{crit} est définie par une déformation de la deuxième bague de précontrainte (16a, 16b, ...) en direction axiale,
sachant que l'ouverture côté basse pression du canal de liaison (17a, 17b, ...) est fermée par la deuxième bague de précontrainte (16a, 16b, ...) dans la position de pression P_{ZN} > P_{H} ou P_{ZN} > P_{ZH},
et sachant que l'angle de faces de contact (αₐ, α_{b}) côté haute pression de l'arête d'étanchéité de la deuxième bague d'étanchéité est inférieur ou égal à l'angle de faces de contact (βₐ, β_{b}) côté basse pression de l'arête d'étanchéité, de sorte que, dans l'état sollicité en pression et lors d'un mouvement de va-et-vient du composant intérieur (2) dans le composant extérieur (3), un débit de fuite donné s'établit pour la bague d'étanchéité (15a, 15b, ...), débit au moyen duquel est réglée la pression hydraulique dans l'espace intermédiaire côté basse pression (Zₐ, Z_{b}, ...).

2. Système d'étanchéité selon la revendication 1, **caractérisé en ce qu'**au moins un des canaux de liaison (17a, 17b, 17c, 17d) est prévu dans la deuxième bague d'étanchéité (15a, 15b) ou dans la deuxième rainure annulaire (14a, 14b).

3. Système d'étanchéité selon la revendication 2, **caractérisé en ce que** le canal de liaison est réalisé sous forme de perçage traversant (17a, 17d) ou sous forme d'entaille (17b) ou de rainure (17c).

4. Système d'étanchéité selon la revendication 3, **caractérisé en ce que** le perçage traversant (17a) est prévu, notamment sous forme de perçage diagonal, entre une surface extérieure (11a), tournée vers un fond de rainure (19a), et une face latérale ou un flanc latéral (12a, 13a) côté haute pression de la bague d'étanchéité correspondante (15a).

5. Système d'étanchéité selon la revendication 4, **caractérisé en ce qu'**une des ouvertures de débouché du perçage traversant (17a) est prévue le long de l'étendue axiale de la surface extérieure (11a).

6. Système d'étanchéité selon la revendication 4, **caractérisé en ce que** la deuxième bague d'étanchéité (15a, 15b) présente une entaille ou rainure prévue le long de l'étendue radiale de la surface extérieure (11a, 11b) et dans laquelle est prévue une des ouvertures de débouché du perçage traversant (17a).

7. Système d'étanchéité selon la revendication 3, **caractérisé en ce que** l'entaille (1 7b) ou la rainure est prévue dans une surface extérieure (11b) tournée vers un fond de rainure (19b) et dans un flanc latéral (13b) côté haute pression de la bague d'étanchéité correspondante (15b).

8. Système d'étanchéité selon la revendication 7, **caractérisé en ce que** l'entaille (17b) ou la rainure est réalisée sur la surface extérieure (11b) de longueur variable avec une composante de direction axiale.

9. Système d'étanchéité selon la revendication 2, **caractérisé en ce que** le canal de liaison (17c, 17d) est prévu sous forme de rainure ou d'entaille dans le fond de rainure (19c, 19d) et dans un flanc de rainure (29c, 29d) côté haute pression de la deuxième rainure annulaire (14c, 14d), sachant qu'alternativement, l'entaille ou la rainure dans le flanc de rainure (29c, 29d) côté haute pression est réalisée sous forme de perçage traversant dans le composant extérieur (3).

10. Système d'étanchéité selon l'une des revendications 3 ou 6 à 9, **caractérisé en ce que** la rainure est prévue sous forme de rainure en V ou de rainure rectangulaire.

11. Système d'étanchéité selon l'une des revendications 1 à 10, **caractérisé en ce qu'**une rainure annulaire supplémentaire tournée vers le côté basse pression (N) est prévue sur le composant extérieur (3), rainure qui est ouverte vers le composant intérieur (2) et dans laquelle est prévu un segment racleur appliqué contre le composant intérieur (2) et constitué d'un matériau élastiquement déformable.

12. Système d'étanchéité selon l'une des revendications 1 à 11, **caractérisé en ce qu'**au moins une des bagues de précontrainte (6, 16a, 16b, 16c, 16d) est un joint torique, une bague de section carrée, un joint quadrilobe (Quad-Ring®) ou une pièce façonnée.

13. Système d'étanchéité selon l'une des revendications 1 à 12, **caractérisé en ce que** le composant extérieur (3) est un boîtier, notamment un cylindre, et le composant intérieur (2) une tige de piston d'un piston guidé dans le boîtier, et les rainures annulaires (4, 14a, 14b) sont configurées soit dans le composant extérieur (3), soit dans le composant intérieur (2).

14. Système d'étanchéité selon la revendication 1, **caractérisé en ce qu'**au moins une des arêtes d'étanchéité (18a, 18b) est arrondie.

15. Utilisation d'un système d'étanchéité selon l'une des revendications précédentes pour le réglage d'une cascade de pression dans des espaces intermédiaires, **caractérisé en ce que** les pressions hydrauliques dans les espaces intermédiaires (Zₐ, Z_{b}, ...) sont réglées de telle sorte que la même différence de pression est présente au niveau de chaque deuxième bague d'étanchéité (15a, 15b, ...).
